# EUROPÄISCHE PATENTSCHRIFT

(11) **EP 1 298 458 B1**
(45) Veröffentlichungstag und Bekanntmachung des Hinweises auf die Patenterteilung: **20.07.2005**
(21) Anmeldenummer: 01123134.7
(22) Anmeldetag: 27.09.2001
(51) Int. Cl.: G02B 3/00, G03B 42/08

(54) **Abbildungsvorrichtung zum Abbilden eines länglichen Gegenstandes**
Imaging device to image an extended object
Dispositif d'imagerie d'un objet étendu en longueur

(43) Veröffentlichungstag der Anmeldung: 02.04.2003
(73) Patentinhaber: Agfa-Gevaert AG, 51373 Leverkusen (DE)
(72) Erfinder: Reiser, Georg, 80337 München (DE)

(56) Entgegenhaltungen:
- DE-C- 19 962 775
- US-A- 4 025 157
- US-A- 5 619 488
- US-A- 5 796 525

## Beschreibung

Die Erfindung betrifft allgemein eine Abbildungsvorrichtung zum Abbilden eines länglichen Gegenstandes gemäß dem Oberbegriff des Anspruchs 1.

Beim optischen Abtasten eines Objekts, beispielsweise eines gedruckten Textes oder Bildes zum Erfassen der darin abgespeicherten Information wird das Objekt in der Regel zeilenförmig belichtet. Das von der belichteten Zeile des Objekts abgestrahlte Licht weist eine Intensität auf, die dem gedruckten Text oder Bild entspricht. Es wird von einer Abbildungsoptik auf eine - in der Regel ebenfalls zeilen- oder matrixförmige - Empfängervorrichtung abgebildet, durch die die Intensitätsschwankungen des Lichts in elektrische Signale für die weitere Verarbeitung und Anzeige des Abtastergebnisses umgewandelt werden.

Beispiele für Geräte, die auf dieser Technik basieren sind Flachbett- Scanner und Auslesegeräte für Röntgen- Filme. Bei LED- Druckern werden zeilen- oder matrixförmig angeordnete LEDs (lichtemittierende Dioden) selektiv angesteuert, und das von ihnen ausgestrahlte Licht wird durch eine Abbildungsoptik auf ein photosensitives Medium fokussiert, von dem es dann auf ein vorbeilaufendes Papier übertragen wird.

Bei den genannten Anwendungsformen ist es die Aufgabe der Abbildungsoptik, einen länglichen Gegenstand, von dem Licht abgestrahlt wird, optimal auf eine Fläche abzubilden, die im wesentlichen die gleichen geometrischen Abmessungen wie der abzubildende Gegenstand hat.

Eine solche Abbildungsoptik mit einem Linsen- Array ist beispielsweise aus US 6 088 164 bekannt. Bei dieser Abbildungsoptik werden Lichtstrahlen von einer Lichtquelle, die aus mehreren zeilenförmig angeordneten, Licht emittierenden Elementen besteht, auf eine Oberfläche eines Speichermediums durch ein Linsen- Array fokussiert, das aus mehreren Sammellinsen besteht, die in Abtastrichtung so angeordnet sind, dass sich zwei zueinander versetzte Zeilen ergeben.

Der Nachteil bei diesem Stand der Technik besteht darin, dass aufgrund der geometrischen Randbedingungen für den Linsen- Array (maximale Baugröße) die numerische Apertur begrenzt ist, so dass die Lichtstärke der Abbildungsoptik gering ist. Dies gilt umso mehr, wenn das Linsen- Array als Faser- Array aufgebaut wird. In diesem Fall treten außerdem Übersprech- Phänomene ("Crosstalk") auf.

Aus DE 199 62 775 dem nächstliegenden Stand der Technik, welche den Oberbegriff von Anspruch 1 offenbart, ist eine Vorrichtung zum Auslesen von in einer Speicherschicht abgespeicherten Informationen bekannt. Bei dieser Vorrichtung wird die Emissionsstrahlung, die von einer belichteten Röntgenkassette abgestrahlt wird, durch ein optisches Abbildungsmittel auf ein Empfangsmittel abgebildet, dessen numerische Apertur bezogen auf die angeregte Zeile der Röntgenkassette quer zur Richtung der Zeile größer als in Richtung der Zeile ist. Das Abbildungsmittel besteht dabei aus zwei zur angeregten Zeile parallelen Zylinderlinsen und einem zwischen den Zylinderlinsen angeordneten Linsen- Array mit zur angeregten Zeile senkrechten Zylinderlinsen.

Dieser Aufbau mit Zylinderlinsen ist aufgrund der vielen nicht-sphärisch geschliffenen Oberflächen sehr aufwendig und damit teuer.

Es ist Aufgabe der vorliegenden Erfindung, eine Abbildungsoptik zu schaffen, die eine optimale Lichtstärke aufweist kostengünstig herzustellen ist, und eine seitenrichtige Abbildung bei kompaletem Aufbau und verminderten Justieraufwand erlaubt.

Diese Aufgabe wird erfindungsgemäß durch eine Abbildungsvorrichtung mit den Merkmalen nach Anspruch 1 gelöst. Bevorzugte Ausführungsformen und Anwendungen der Erfindung sind Gegenstand der Unteransprüche.

Die der Erfindung zugrundeliegende Idee ist es, statt Linsen optische Elemente mit ortsabhängigem Brechungsindex einzusetzen und damit die in der Herstellung teuren geschliffenen Oberflächen durch ein lineares "Gradientenindex-(GRIN-) Array" zu ersetzen. Insbesondere werden erfindungsgemäß die Linsen ersetzt, die zur horizontalen Bündelung des Lichts dienen. Dabei wird hier und im folgenden unter horizontal die Richtung parallel zu dem länglichen Gegenstand und unter vertikal die dazu senkrechte Richtung verstanden. Statt des Linsen-Arrays aus horizontalen Zylinderlinsen wird also ein Stapel aus transparenten Glasschichten eingesetzt, wobei die Glasschichten in horizontaler Ebene einen sich ändernden Brechungsindex (Gradientenindex, GRIN) aufweisen. Mit anderen Worten, die erfindungsgemäße Abbildungsvorrichtung zum Abbilden eines länglichen Gegenstandes mit wenigstens einer Vertikalzylinderlinsenvorrichtung, die das von dem länglichen Gegenstand ausgehende Licht in einer vertikalen Richtung bündelt, und mehreren, matrixförmig in wenigstens einer Linsenzeile hinter der Vertikalzylinderlinsenvorrichtung angeordneten Linsenelementen, die jeweils das von dem länglichen Gegenstand ausgehende Licht in einer horizontalen Richtung bündeln, ist dadurch gekennzeichnet, dass jedes der mehreren Linsenelemente wenigstens eine für das von dem länglichen Gegenstand ausgehende Licht transparente Horizontalsammelschicht umfasst, die einen Brechungsindex mit einem Gradienten in der horizontalen Richtung aufweist.

Insbesondere entspricht die Ausdehnung der wenigstens einen transparenten Horizontalsammelschicht in der vertikalen Richtung im wesentlichen der Ausdehnung der vorderen und/oder hinteren Vertikalzylinderlinsenvorrichtung in der vertikalen Richtung.

Bei einer bevorzugten Ausführungsform ist die optische Dicke der wenigstens einen transparenten Horizontalsammelschicht so gewählt, dass durch sie eine 1:1- Abbildung erzeugt wird.

Zusätzlich zu ihrem Brechungsindex können wenigstens einige der Horizontalsammelschichten jeweils wenigstens eine zylindrisch gekrümmte Oberfläche aufweisen, durch die das Licht in die Schicht ein- oder austritt. Durch die Kombination von Gradientenindex-Array und gekrümmter Oberfläche lässt sich eine erhöhte Lichtsammelleistung bewirken, welche die von gekrümmten Oberflächen, wie sie im Stand der Technik beschrieben sind, weitaus übertrifft.

Die Abbildungsoptik kann in einer Vorrichtung zum Auslesen von in einer Speicherschicht abgespeicherten Informationen mit einer Strahlungsquelle zum Anregen oder Belichten eines zeilenförmigen Bereichs der Speicherschicht mit einer Primärstrahlung, so dass die Speicherschicht in Abhängigkeit von der darin gespeicherten Information eine Sekundärstrahlung ausgibt, mehreren, matrixförmig in wenigstens einer Empfängerzeile angeordneten lichtempfindlichen Flächen zum Empfangen der Sekundärstrahlung von der Speicherschicht, wobei die wenigstens eine Empfängerzeile im wesentlichen parallel zu dem zeilenförmigen Bereich der Speicherschicht verläuft, eingesetzt werden, wobei sie zwischen der Strahlungsquelle und der wenigstens einen Empfängerzeile angeordnet ist und für die Sekundärstrahlung transparent ist.

Ein Vorteil der Erfindung besteht u.a. darin, dass die Skalierung bzw. Anpassung der geometrischen Dimensionen der optischen Elemente an wechselnde Anforderungen bei vergleichsweise geringen Kosten über einen großen Bereich möglich ist.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Fig. 1 zeigt schematisch den Aufbau eines konventionellen Druckers.

Fig. 2A, 2B und 2C zeigen einen Ausschnitt einer ersten Ausführungsform der erfindungsgemäßen Abbildungsoptik bzw. die optischen Merkmale und Eigenschaften eines Elements daraus.

Fig. 3 zeigt schematisch den Aufbau eines Durchlicht- Scanners, bei dem die Erfindung angewendet werden kann.

Fig. 4 zeigt schematisch den Aufbau einer Auflicht- Auslesevorrichtung, bei der die Erfindung angewendet werden kann.

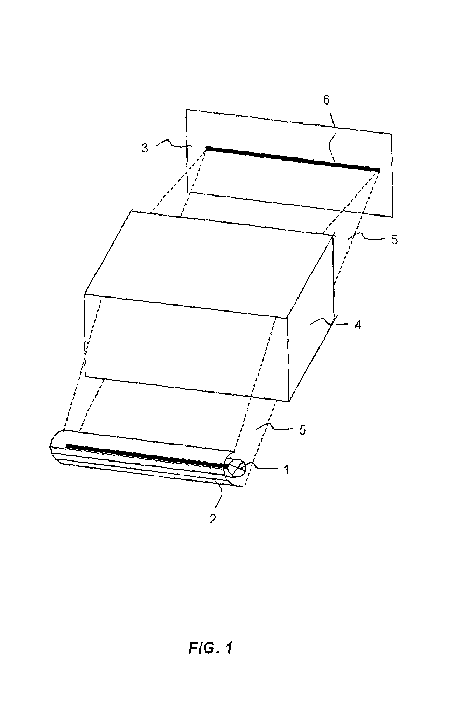

Der Drucker in Fig. 1 umfasst eine Lichtquelle 1, die in einem Gehäuse 2 mit einem Reflektor untergebracht ist. Die Lichtquelle besteht aus mehreren (nicht dargestellten) Einzelelementen, z.B. lichtemittierenden Dioden (LED), die selektiv unabhängig voneinander angesteuert werden können. Ihr Licht wird durch eine Abbildungsoptik 4 auf ein photosensitives Medium 3 abgebildet. Das photosensitive Medium kann dabei ein Halbleiter sein oder ein lichtempfindlicher Film, der durch den Drucker selektiv belichtet wird. Je nach Ansteuerung der Einzelelemente der Lichtquelle wird durch das Licht 5 ein Bild 6 der Lichtquelle 1 auf dem Medium 3 erzeugt, wobei hier zur Verdeutlichung sowohl Lichtquelle 1 als auch das Bild 6 der Lichtquelle 1 durch einen breiten schwarzen Strich dargestellt sind.

Eine erste Ausführungsform der Abbildungsoptik 4 ist in Fig. 2A mit Einzelheiten dargestellt. Abgebildet wird durch die Abbildungsoptik 4 ein länglicher Gegenstand 7. Der längliche Gegenstand 7 kann eine Lichtquelle sein, dann ist das Licht 5 Primärlicht. Ebenso gut kann der längliche Gegenstand 7 aber auch ein nicht leuchtendes Objekt sein, das von einer Primärlichtquelle belichtet wird. Dann ist das Licht 5 Sekundärlicht, das von dem Objekt ausgeht. Durch die Abbildungsoptik 4 wird in einer Bildebene 8 ein Abbild 9 des Gegenstands 7 erzeugt. Die Abbildungsvorrichtung umfasst in der gezeigten Ausführungsform eine vordere Vertikalzylinderlinsenvorrichtung 10 und eine hintere Vertikalzylinderlinsenvorrichtung 11, die jeweils das von dem länglichen Gegenstand ausgehende Licht 7 in einer vertikalen Richtung bündeln. ("Vertikal" bedeutet quer zur Längsausdehnung des Gegenstandes, "horizontal" bedeutet in Richtung der Längsausdehnung des Gegenstandes.)

Um den Gegenstand 7 auch in horizontaler Richtung auf die Bildebene 8 abzubilden, sind mehrere fokussierende Elemente zwischen der vorderen und hinteren Vertikalzylinderlinsenvorrichtung 10 bzw. 11 zeilen- oder matrixförmig angeordnet. Die fokussierenden Elemente dieser Matrix bzw. Zeile 12 sind im Stand der Technik Zylinderlinsen, deren Längsrichtung vertikal zum Gegenstand 7 verläuft, so dass durch sie das von dem länglichen Gegenstand ausgehende Licht 7 in einer horizontalen Richtung gebündelt wird.

Da derartige Zylinderlinsen aber teuer in der Herstellung sind und längs des Gegenstandes 7 zahlreiche derartige Zylinderlinsen benötigt werden, werden bei der erfindungsgemäßen Abbildungsoptik statt der Linsenelemente jeweils eine Horizontalsammelschicht 13 verwendet, so dass sich ein Stapel 12 von Glasschichten 13 ergibt. Jede einzelne Horizontalsammelschicht 13 entspricht optisch einer zylinderförmigen Sammellinse, die das Licht in horizontaler Richtung bündelt.

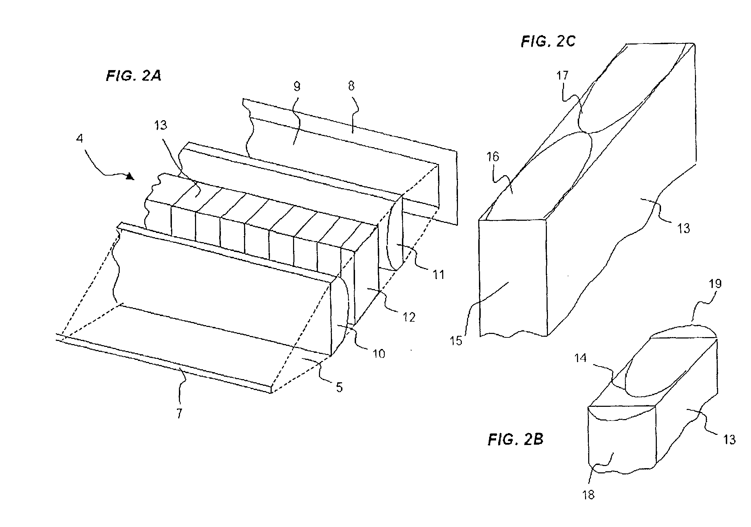

Dazu weist die einzelne Horizontalsammelschicht einen Brechungsindex auf, der ortsabhängig ist und dessen Verlauf 14 in Fig. 2B gezeigt ist. Wie der perspektivischen Darstellung in Fig. 2B zu entnehmen ist, weist der Verlauf des Brechungsindex' einen Gradienten in der horizontalen Richtung auf, d.h. der Brechungsindex ist in der mittleren Ebene der Horizontalsammelschicht 13, die sich in Ausbreitungsrichtung des Lichtes erstreckt, hoch, während der Brechungsindex an den Rändern der Horizontalsammelschicht 13 niedrig ist.

Die Abbildungseigenschaften einer solchen Horizontalsammelschicht 13 sind in Fig. 2C gezeigt. Das Licht tritt durch eine plane Eintrittsfläche 15 in die Horizontalsammelschicht 13 ein und wird je nach Eintrittspunkt in der Eintrittsfläche 15 in einem unterschiedlichen Winkel zu der Eintrittsfläche 15 abgelenkt. Je nach ihrem Ort des Eintritts in die Horizontalsammelschicht 13 und Winkel zur Eintrittsfläche 15 werden Lichtstrahlen an der Eintrittsfläche 15 gebrochen. Der Verlauf von zwei Lichtstrahlen in der Horizontalsammelschicht 13 ist dargestellt, der eine rechts von der Mitte, der andere links von der Mitte der Horizontalsammelschicht 13. Ihr Strahlengang in der Horizontalsammelschicht 13 ergibt jeweils einen Zweig einer Ellipse 16, einer im Uhrzeigersinn, der andere entgegen dem Uhrzeigersinn. Nach dem Durchlaufen der Ellipse 16 erhält man so ein umgedrehtes Bild des abgebildeten Gegenstandes. Damit das Bild hinter der Horizontalsammelschicht 13 die gleiche Ausrichtung wie der abgebildete Gegenstand hat, muss die optische Dicke der Horizontalsammelschicht 13 so gewählt werden, dass von dem Licht zwei oder allgemein eine gerade Anzahl von Ellipsen durchlaufen werden. In Fig. 2C sind dies die beiden Ellipsen 16 und 17.

Bei einer speziellen Ausführungsform der Horizontalsammelschichten 13, dargestellt in Fig. 2C, sind die Eintrittsflächen 18 und die Austrittsflächen 19 zylindrisch gekrümmt. Dadurch wird erreicht, dass die Ortsabhängigkeit des Brechungswinkels von dem Abstand von der Mittelebene der Schicht auch nach Erzeugung des Brechungsindex' noch variiert werden kann (oder umgekehrt erst ein Profil der Ein- und Austrittsflächen hergestellt wird und dann durch Erzeugen eines Brechungsindexgradienten im Glas die Abhängigkeit des Brechungswinkels vom Abstand von der Mittelebene variiert wird). Insbesondere erweitert man durch die Schaffung eines zusätzlichen Parameters (Brechungsindexverlauf und Krümmung der Ein- und Austrittsflächen) den Bereich der Abbildungseigenschaften der Abbildungsoptik 4.

Vorzugsweise wird eine 1:1- Abbildung durch die Horizontalsammelschicht 13 angestrebt, d.h. das Bild ist in horizontaler Richtung gleich groß wie der abgebildete Gegenstand. Es können aber grundsätzlich beliebige Abbildungsmaßstäbe gewählt werden.

Die Dicke der Horizontalsammelschicht 13, d.h. ihre Ausdehnung in horizontaler Richtung (parallel zur Längsausdehnung des Gegenstands) wird bestimmt durch den Verlauf des Brechungsindexgradienten, genauer gesagt durch die Differenz zwischen maximalem und minimalem Brechungsindex und durch die Öffnung der Parabel. Beispielsweise lässt sich in einem bestimmten Glas durch lonenaustausch ein maximaler Brechungsindex von 1,65 und ein minimaler Brechungsindex von 1,56 bei einer Dicke zwischen 0,8mm und 1,3mm herstellen. Um die Anzahl der Komponenten der erfindungsgemäßen Vorrichtung zu minimieren, werden vorzugsweise derartige Horizontalsammelschichten 13 mit der maximal möglichen Dicke verwendet.

Die Ausdehnung der Horizontalsammelschicht 13 in der vertikalen Richtung wird im wesentlichen durch die Ausdehnung der vorderen und hinteren Vertikalzylinderlinsenvorrichtung 10 bzw. 11 in der vertikalen Richtung vorgegeben. Es ist sinnvoll, die Ausdehnung der Horizontalsammelschicht 13 in vertikaler Richtung so zu wählen, dass das Licht von der vorderen Vertikalzylinderlinsenvorrichtung 10 die Horizontalsammelschicht ganz ausfüllt.

Um Übersprechen zwischen den einzelnen Schichten 13 zu unterbinden, werden zwischen den Schichten 13 vorzugsweise (nicht dargestellte) Absorberschichten eingefügt. Diese Absorberschichten erfüllen insbesondere gleichzeitig die Aufgabe, die Horizontalsammelschichten 13 mechanisch miteinander zu verbinden, d.h. die Absorberschichten sind Kleberschichten.

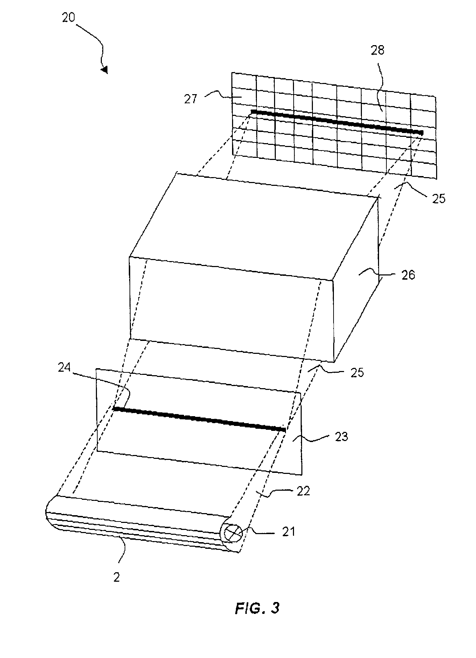

Die in den Fig. 2A bis C dargestellte Abbildungsoptik eignet sich neben Druckern besonders für das Auslesen von Information aus Speicherschichten. Dies wird im folgenden anhand zweier Anwendungsbeispiele erläutert. In Fig. 3 ist ein Durchlicht- Scanner gezeigt, der allgemein mit 20 bezeichnet ist. Die Abbildungsoptik ist Bestandteil des Durchlicht- Scanners 20 zum Auslesen von in einer Speicherschicht 23 abgespeicherten Informationen. Eine Strahlungsquelle 21 dient zum Anregen oder Belichten eines zeilenförmigen Bereichs 24 der Speicherschicht 23 mit einer Primärstrahlung 22. Durch die Primärstrahlung 22 wird die Speicherschicht 23 angeregt (d.h. das Primärlicht 22 wird zunächst von der Speicherschicht absorbiert), und die Speicherschicht 23 emittiert in Abhängigkeit von der darin gespeicherten Information eine Sekundärstrahlung 25. Diese Sekundärstrahlung 25 wird durch die Abbildungsoptik 26 auf mehrere, in einer Matrix 27 angeordnete, lichtempfindliche Flächen 28 abgebildet, so dass sich dort ein Bild der Anregungszeile 24 ergibt. Der Übersichtlichkeit halber ist die Anregungszeile und ihr Bild auf der Matrix 27 als breiter Strich dargestellt. Diese Matrix 27 ist insbesondere ein CCD- Array, das in regelmäßigen Abständen ausgelesen wird, wobei seine Ausgangssignale anschließend von einer (nicht gezeigten) Elektronik weiterverarbeitet werden.

Die Abbildungsvorrichtung 26 ist beispielsweise wie die Ausführungsform in Fig. 2A bis C aufgebaut.

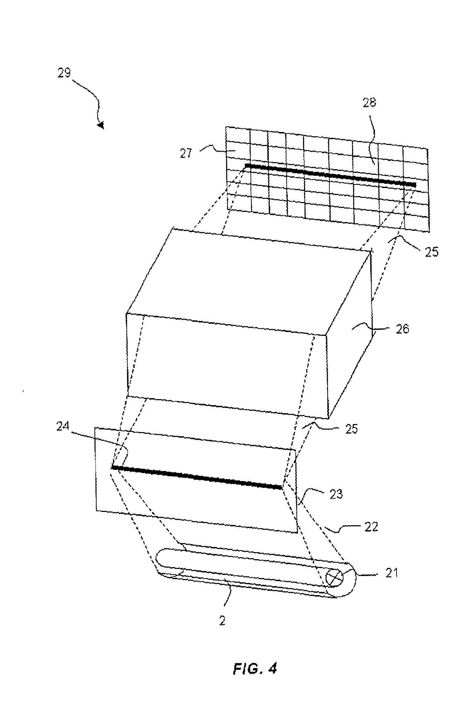

Ein weiteres Anwendungsbeispiel für die erfindungsgemäße Abbildungsoptik ist eine Auflicht- Auslesevorrichtung 29 nach Fig. 4. Eine derartige Auflicht- Auslesevorrichtung 29 dient insbesondere zum Auslesen von Röntgenkassetten mit einer Speicherschicht 23. In dieser Speicherschicht wird mittels Röntgenlicht Information abgespeichert. Nach Anregung mit einer Primärlichtquelle wird durch die Speicherschicht in dem zeilenförmigen angeregten Bereich 24 Sekundärlicht emittiert, das durch die Abbildungsoptik 26 auf eine Matrix 27 aus lichtempfindlichen Flächen 28 abgebildet wird. Bei einer derartigen Vorrichtung für das Auslesen von Röntgenkassetten haben Primärlicht und Sekundärlicht u.U. unterschiedliche Wellenlängen. Es ist daher einerseits notwendig, dass die Abbildungsoptik für das Sekundärlicht transparent ist, andererseits kann durch geschickte Wahl des Transmissionsbereichs der Abbildungsoptik 26 verhindert werden, dass Primärlicht auf die Matrix 27 gelangt.

### Bezugszeichen

- 1: Lichtquelle
- 2: Gehäuse, Reflektor
- 3: photosensitives Medium
- 4: Abbildungsoptik
- 5: Strahlengang
- 6: Bild der Lichtquelle
- 7: Gegenstand
- 8: Abbildungsebene
- 9: Bild von Gegenstand in Abbildungsebene
- 10: vordere Zylinderlinse für vertikale Bündelung des Lichts
- 11: hintere Zylinderlinse für vertikale Bündelung des Lichts
- 12: Horizontallinsenzeile, Stapel aus transparenten Horizontalsammelschichten
- 13: transparente Horizontalsammelschicht
- 14: Brechungsindexverlauf in transparenter Horizontalsammelschicht
- 15: Lichteintrittsfläche der transparenten Horizontalsammelschicht
- 16: erste Umkehrung des Bildes in der transparenten Horizontalsammelschicht
- 17: zweite Umkehrung des Bildes in der transparenten Horizontalsammelschicht
- 18: zylindrische Eintrittsfläche
- 19: zylindrische Austrittsfläche
- 20: Durchlicht- Scanner
- 21: Lichtquelle von Durchlicht- Scanner
- 22: Primärstrahlung
- 23: Speicherschicht
- 24: belichteter (zeilenförmiger) Bereich der Speicherschicht
- 25: Sekundärstrahlung
- 26: Abbildungsoptik
- 27: Array (CCD-) aus lichtempfindlichen Flächen
- 28: lichtempfindliche Fläche
- 29: Auflicht- Auslesevorrichtung für Röntgen- Kassette

## Patentansprüche

1. Abbildungsvorrichtung zum Abbilden eines länglichen Gegenstandes (7) mit
- wenigstens einer Vertikalzylinderlinsenvorrichtung (10, 11), die Licht von dem länglichen Gegenstand (7) in einer vertikalen Richtung bündelt, und
- mehreren, matrixförmig in wenigstens einer Linsenzeile (12) hinter der Vertikalzylinderlinsenvorrichtung (10, 11) angeordneten Linsenelementen, die jeweils Licht von dem länglichen Gegenstand (7) in einer horizontalen Richtung bündeln,
**dadurch gekennzeichnet, dass**
- jedes der mehreren Linsenelemente wenigstens eine für das von dem länglichen Gegenstand (7) ausgehende Licht transparente Horizontalsammelschicht (13) umfasst, die einen Brechungsindex (14) mit einem Gradienten in der horizontalen Richtung aufweist, und
- die optische Dicke der Horizontalsammelschicht (13) so gewählt ist, dass das Bild (9) des abgebildeten Gegenstandes (7) hinter der Horizontalsammelschicht (13) die gleiche Ausrichtung wie der abgebildete Gegenstand (7) hat.

2. Vorrichtung nach Anspruch 1, **dadurch gekennzeichnet, dass** die Ausdehnung der wenigstens einen transparenten Horizontalsammelschicht (13) in der vertikalen Richtung im wesentlichen der Ausdehnung der vorderen und/oder hinteren Vertikalzylinderlinsenvorrichtung (10, 11) in der vertikalen Richtung entspricht.

3. Vorrichtung nach einem der vorangehenden Ansprüche, **dadurch gekennzeichnet, dass** die optische Dicke der wenigstens einen transparenten Horizontalsammelschicht (13) so gewählt ist, dass durch sie eine 1:1- Abbildung erzeugt wird.

4. Vorrichtung nach einem der vorangehenden Ansprüche, **dadurch gekennzeichnet, dass** wenigstens einige der Horizontalsammelschichten (13) jeweils wenigstens eine zylindrisch gekrümmte Oberfläche (18, 19) aufweisen, durch die das Licht in die Schicht ein- oder austritt.

5. Druckervorrichtung mit einer ansteuerbaren Lichtquelle (1) zum selektiven Belichten eines photosensitiven Mediums (3) und einer Vorrichtung nach einem der Ansprüche 1 bis 4.

6. Vorrichtung zum Auslesen von in einer Speicherschicht (23) abgespeicherten Informationen mit
- einer Strahlungsquelle (1) zum Anregen oder Belichten eines zeilenförmigen Bereichs (24) der Speicherschicht (23) mit einer Primärstrahlung (22), so dass die Speicherschicht (23) in Abhängigkeit von der darin gespeicherten Information eine Sekundärstrahlung (25) ausgibt,
- mehreren, matrixförmig in wenigstens einer Empfängerzeile (27) angeordneten lichtempfindlichen Flächen (28) zum Empfangen der Sekundärstrahlung von der Speicherschicht (23), wobei die wenigstens eine Empfängerzeile (27) im wesentlichen parallel zu dem zeilenförmigen Bereich (29) der Speicherschicht verläuft,
**dadurch gekennzeichnet, dass** zwischen der Strahlungsquelle (1) und der wenigstens einen Empfängerzeile (27) eine Abbildungsvorrichtung nach einem der vorangehenden Ansprüche angeordnet ist, die für die Sekundärstrahlung transparent ist.

7. Durchlicht- Scanner (20) mit einer Speicherschicht (23) zum Abspeichern von Informationen und einer Vorrichtung nach Anspruch 6.

8. Auflicht- Auslesevorrichtung (29) für Röntgenkassette mit einer Speicherschicht (23) zum Abspeichern von Informationen und einer Vorrichtung nach Anspruch 6.

## Claims

1. An imaging device for imaging a long object (7), comprising
- at least one vertical cylinder lens device (10, 11) which concentrates light from the long object (7) in a vertical direction, and
- a plurality of lens elements arranged in matrix form in at least one lens row (12) behind the vertical cylinder lens device (10, 11), which in each case concentrate light from the long object (7) in a horizontal direction,
wherein
- each of the plurality of lens elements includes at least one horizontal collecting layer (13) transparent to the light emanating from the long object (7) and having a refractive index (14) which has a gradient in the horizontal direction, and
- the optical thickness of the horizontal collecting layer (13) is so selected that the image (9) of the object (7) imaged has the same orientation behind the horizontal collecting layer (13) as the object (7) imaged.

2. A device as claimed in claim 1, wherein the extension of the at least one transparent horizontal collecting layer (13) in the vertical direction corresponds substantially to the extension of the front and/or rear vertical cylinder lens device (10, 11) in the vertical direction.

3. A device as claimed in any one of the preceding claims, wherein the optical thickness of the at least one transparent horizontal collecting layer (13) is so selected that 1:1 imaging is produced thereby.

4. A device as claimed in any one of the preceding claims, wherein at least some of the horizontal collecting layers (13) have in each case at least one cylindrically curved surface (18, 19) through which the light enters or exits the layer.

5. A printer device having an activatable light source (1) for selectively exposing a photosensitive medium (3) and including a device as claimed in at least one of claims 1 to 4.

6. A device for reading out information stored in a storage layer (23), comprising
- a radiation source (1) for stimulating or exposing a linear zone (24) of the storage layer (23) with a primary radiation (22), so that the storage layer (23) emits a secondary radiation (25) as a function of the information stored therein;
- a plurality of photosensitive surfaces (28) arranged in matrix form in at least one receiver row (27) for receiving the secondary radiation from the storage layer (23), the at least one receiver row (27) being disposed substantially parallel to the linear zone (29) of the storage layer,
wherein an imaging device as claimed in any one of the preceding claims and transparent to the secondary radiation is arranged between the radiation source (1) and the at least one receiver row (27).

7. A transmitted-light scanner (20) having a storage layer (23) for storing information and including a device as claimed in claim 6.

8. A reflected-light read-out device (29) for X-ray cassette having a storage layer (23) for storing information and including a device as claimed in claim 6.

## Revendications

1. Dispositif d'imagerie pour la reproduction d'un objet (7) étendu en longueur avec
- au moins un dispositif à lentilles cylindriques verticales (10, 11), qui focalise la lumière de l'objet (7) étendu en longueur dans une direction verticale et
- plusieurs éléments de lentilles disposés en forme de matrice dans au moins une rangée de lentilles (12) derrière le dispositif à lentilles cylindriques verticales (10, 11), qui focalisent chacun la lumière de l'objet (7) étendu en longueur dans une direction horizontale,
**caractérisé en ce que**
- chacun des plusieurs éléments de lentilles comporte au moins une couche collectrice horizontale (13) transparente pour la lumière partant de l'objet (7) étendu en longueur, couche qui présente un indice de réfraction (14) avec un gradient dans la direction horizontale, et **en ce que**
- l'épaisseur optique de la couche collectrice horizontale (13) est choisie de telle sorte que l'image (9) de l'objet (7) reproduit a la même orientation derrière la couche collectrice horizontale (13) que l'objet (7) reproduit.

2. Dispositif selon la revendication 1, **caractérisé en ce que** l'étendue de l'au moins une couche collectrice horizontale (13) transparente correspond essentiellement dans la direction verticale à l'étendue du dispositif à lentille cylindrique verticale (10, 11) avant et/ou arrière dans la direction verticale.

3. Dispositif selon l'une quelconque des revendications précédentes, **caractérisé en ce que** l'épaisseur optique de l'au moins une couche collectrice horizontale (13) transparente est choisie de telle sorte qu'une image 1 : 1 est engendrée par elle.

4. Dispositif selon l'une quelconque des revendications précédentes, **caractérisé en ce qu'**au moins quelques-unes des couches collectrices horizontales (13) comportent chacune une surface incurvée cylindriquement (18, 19) par laquelle la lumière entre dans la couche ou en sort.

5. Dispositif d'imprimante avec une source de lumière (1) excitable pour l'exposition sélective d'un milieu photosensible (3) et un dispositif selon l'une quelconque des revendications 1 à 4.

6. Dispositif pour la lecture d'informations mémorisées dans une couche mémoire (23), avec
- une source de rayonnement (1) pour l'excitation ou pour l'exposition d'une zone (24) en forme de rangée de la couche mémoire (23) par un rayonnement primaire (22), de telle sorte que la couche mémoire (23) émet un rayonnement secondaire (25) en fonction de l'information qui est enregistrée dedans,
- plusieurs surfaces sensibles à la lumière (28) disposées sous la forme d'une matrice dans au moins une rangée de réception (27) pour la réception du rayonnement secondaire depuis la couche mémoire (23), sachant que l'au moins une rangée de réception (27) s'étend essentiellement parallèlement à la zone en forme de rangée (29) de la couche mémoire,
**caractérisé en ce qu'**un dispositif d'imagerie selon l'une quelconque des revendications précédentes est disposé entre la source de rayonnement (1) et l'au moins une rangée de réception (27), dispositif d'imagerie qui est transparent au rayonnement secondaire.

7. Scanner en lumière transmise (20) avec une couche mémoire (23) pour la mémorisation d'informations et un dispositif selon la revendication 6.

8. Dispositif de lecture en lumière réfléchie (29) pour des cassettes de radiographie avec une couche mémoire (23) pour la mémorisation d'informations et un dispositif selon la revendication 6.
